# EUROPÄISCHE PATENTANMELDUNG

(11) **EP 1 120 051 A2**
(43) Veröffentlichungstag der Anmeldung: **01.08.2001**
(21) Anmeldenummer: 00128605.3
(22) Anmeldetag: 28.12.2000
(51) Int. Cl.: A23N 12/10

(54) **Röstvorrichtung und Verfahren zum Rösten von Rohkaffee o. dgl.**

(30) Priorität: 12.01.2000 DE 10000810
(71) Anmelder: Dieckmann, Manfred, 27248 Ehrenburg (DE)
(72) Erfinder: Heidmann, Fritz, 27248 Ehrenburg (DE)
(74) Vertreter: Eisenführ, Speiser & Partner

(57) **Zusammenfassung**

Die Erfindung betrifft eine Röstvorrichtung (101) und ein Verfahren zum Rösten von Rohkaffee o. dgl., mit einer drehbar gelagerten und antreibbaren Rösttrommel (104) zum Aufnehmen des zu röstenden Rohkaffees die solche Öffnungen (124) aufweist, dass der Rohkaffee während des Röstens von außen sichtbar ist. Erfindungsgemäß ist vorgesehen, dass die Rösttrommel (104) an einem im wesentlichen geschlossenen Gehäuse (102) gelagert und im Betrieb in diesem angeordnet ist, das mindestens eine als Sichtfenster ausgebildete Öffnung (124) aufweist, so dass die Rösttrommel (104) und der zu röstende Rohkaffee von außen sichtbar ist.

## Beschreibung

Die Erfindung betrifft eine Röstvorrichtung und ein Verfahren zum Rösten von Rohkaffee o. dgl. mit einer drehbar gelagerten und antreibbaren Rösttrommel zum Aufnehmen des zu röstenden Rohkaffees die Rösttrommel solche Öffnungen aufweist, dass der Rohkaffee während des Röstens von außen sichtbar ist.

Rohkaffee-Bohnen werden bereits seit Jahrhunderten mit Hilfe verschiedener Vorrichtungen unter Wärmeeinwirkung geröstet. Durch die Röstung wird der Rohkaffee auf solche Temperaturen erhitzt, dass er sich physikalisch und chemisch ändert und dadurch seine typischen Eigenschaften erhält. Nach dem Rösten kann eine Nachbehandlung, etwa eine Kühlung oder Befeuchtung vorgenommen werden. Die Eigenschaften des gerösteten Kaffees lassen sich durch einstellbare Parameter wie Temperatur, Dauer der Röstung oder die Art der Wärmeeinwirkung variieren. Zum Rösten werden Behältnisse unterschiedlicher Formen und Gestaltungen eingesetzt, in denen der zu röstende Kaffee der Wärmebehandlung ausgesetzt wird, beispielsweise offene Röstpfannen oder Bleche oder kugelförmige oder zylindrische Rösttrommeln.

Für eine Röstung von Kaffee im industriellen Bereich ist aus dem Europäischen Patent EP 0 328 791 eine Röstvorrichtung mit einem geschlossenem Gehäuse aus einem isolierenden Material und einer in dem Gehäuse gelagerten drehbaren Röst trommel bekannt geworden. Durch eine Vielzahl von in der Umfangswand der Rösttrommel ausgebildeten Löchern kann von Infrarot-Heizkörpern abgegebene Wärmestrahlung und heisse Luft in den Innenraum der den zu röstenden Kaffee aufnehmenden Rösttrommel eindringen. Der Kaffee wird in das vollständig geschlossene Gehäuse durch rohrartige Kanäle eingebracht. Der zu röstende Kaffee ist von außen nicht sichtbar. Ein erheblicher Nachteil einer derartigen Röstvorrichtung besteht einerseits in dem sehr hohen apparativen Aufwand und andererseits darin, dass sie für eine private, nicht gewerbliche Nutzung nicht zweckmäßiger Weise verwendet werden kann.

Aus der Deutschen Patentschrift DE 197 31 821 ist ein sogenannter Tischröster zum Rösten von kleinen Chargen von Kaffeebohnen für den privaten Gebrauch bekannt, welcher ein zylindrisches Gehäuse mit einer zylindrischen Röstkammer aufweist. Mit Hilfe eines an dem Gehäuse gelagerten Drehschiebers können verschiedene Anschlussstutzen zum Einleiten von Heißluft und Ein- und Auslassen des Kaffees geöffnet bzw. geschlossen werden. Nachteilig an diesem Tischröster ist, dass der Drehschieber ebenfalls eine verhältnismäßig aufwendige Konstruktion erfordert und darüber hinaus die mittels des erhitzten Luftstroms eingebrachte Wärme verhältnismäßig schlecht auf den zu röstenden Kaffee verteilt werden kann.

Aufgabe der vorliegenden Erfindung ist es, eine Röstvorrichtung bereitzustellen, die die vorstehenden Nachteile vermeidet und insbesondere für private Konsumenten vorgesehen ist, um auf einfache Weise individuell Kaffee rösten zu können

Die Erfindung löst diese Aufgabe bei einer Röstvorrichtung der eingangs genannten Art dadurch, dass die Rösttrommel an einem im Wesentlichem geschlossenen Gehäuse gelagert und im Betrieb in diesem angeordnet ist, das mindestens eine als Sichtfenster ausgebildete Öffnung aufweist, so dass die Rösttrommel und der zu röstende Kaffee von außen sichtbar ist.

Die Vorteile der Erfindung liegen im wesentlichen darin, dass durch die in der Rösttrommel ausgebildeten erfindungsgemäßen Öffnungen der Röstvorgang in einer drehbaren Rösttrommel einerseits von außen sichtbar ist. Hierzu weisen die Öffnungen eine ausreichende Größe auf. Gleichzeitig wird durch die Öffnungen die für den Röstvorgang erforderliche Energie eingebracht, vorzugsweise dadurch, dass ein Heißluftstrom von außen durch die Öffnungen in den Innenraum der Rösttrommel einströmt und den Rohkaffee auf die Rösttemperatur erwärmt. Der Röstvorgang kann von außen durch die nach Art von Sichtfenstern ausgebildeten Öffnungen beobachtet und überwacht werden.

Durch die Anordnung der Rösttrommel in einem im Wesentlichen geschlossenem Gehäuse lässt sich die Wärmeenergie andererseits besser ausnutzen, etwaige sich von den Bohnen lösende Partikel oder Kaffeehäutchen verbleiben weitestgehend in dem Gehäuse und der Röstvorgang lässt sich aufgrund der Öffnung in dem Gehäuse von außen beobachten. Die Öffnungen des Gehäuses oder der Rösttrommel sind dabei auf die hierzu erforderliche Weise relativ zueinander angeordnet. Darüber hinaus kann durch die Öffnungen in dem Gehäuse und der Rösttrommel der durch eine Heißlufterzeugungsanlage bereitgestellte Heißluftstrom durch ebendiese Öffnungen in die Rösttrommel einströmen und auch wieder ausströmen. Insgesamt ist eine sehr einfach konstruierte und bedienbare, ggf. mobile Röststation zum Rösten im privaten Bereich bereitgestellt. Bei der bevorzugten Verwendung einer Heißlufterzeugungsanlage lässt sich der Heißluftstrom aufgrund der Sichtbarkeit des Röstvorgangs durch die Öffnungen in dem Gehäuse und der Rösttrommel auf die Rösttrommel richten, so dass der Röstvorgang individuell beeinflussbar ist. Darüber hinaus kann der aktuelle Röstgrad, der beispielsweise anhand der Farbe des Rohkaffees sichtbar ist, überwacht werden. Ferner kann die Drehgeschwindigkeit der Rösttrommel beobachtet und individuell eingestellt werden, um den Röstvorgang auch auf diese Weise zu beeinflussen. Dies ist bei den herkömmlichen Röstvorrichtungen nicht möglich. Darüber hinaus können unterschiedliche Rohkaffeesorten und Rohkaffee unterschiedlicher Feuchtegrade individuell geröstet werden. Die Röstvorrichtung ist besonders angepasst zum Rösten von kleinen Mengen von Rohkaffee im privaten Bereich, sie weist vorzugsweise eine solche Größe auf, dass sie ohne weiteres auf einem Tisch oder dergleichen platziert werden kann.

Eine Weiterbildung der Erfindung sieht vor, dass die Rösttrommel mindestens teilweise eine als Gitter ausgebildete Wand aufweist, welche die Öffnungen aufweist. Vorzugsweise ist eine Umfangswand der Rösttrommel als Gitter ausgebildet, so dass eine Art Siebtrommel entsteht. Das Gitter oder Sieb kann aus einem hitzebeständigem Geflecht aus Draht oder dergleichen gebildet sein, welches im Wesentlichen sparr- und formstabil ist. Es bietet sich ein verzinktes Drahtgeflecht an.

Eine alternative Ausführungsform zeichnet sich dadurch aus dass, die Öffnung des Gehäuses so gestaltet ist, dass die Rösttrommel durch die Öffnung in das Gehäuse einlegbar bzw. entnehmbar ist. Die gesamte Rösttrommel kann somit vollständig von der Röstvorrichtung genommen werden und dann gefüllt und anschließend wieder in dem Gehäuse platziert werden. Dies ist eine erhebliche Vereinfachung gegenüber vollständig montierten komplexen Industrieröstanlagen. Gemäß einer Weiterbildung wird vorgeschlagen, dass das Gehäuse im wesentlichen quaderförmig ausgebildet ist und die Öffnung teilweise in einer Stirnwand, gegenüberliegenden Seitenwänden und einer vorderen Seitenwand ausgebildet ist, so dass die Rösttrommel gut sichtbar und einfach entnehmbar ist und auf einfache Weise mit einem Heißluftstrom beaufschlagbar ist.

Eine besonders einfache Lagerung ergibt sich dadurch, dass die Rösttrommel zwei seitliche Lagerzapfen aufweist, welche zur Lagerung in Seitenwänden des Gehäuses ausgebildete Einbuchtungen einlegbar sind.

Eine einfache Beschickung der Rösttrommel ergibt sich dadurch, dass die Rösttrommel rotationsymmetrisch, vorzugsweise zylindrisch ausgebildet ist und wenigstens eine stirnseitige Wand an der Umfangswand der Röstrommel lösbar befestigt ist, so dass der Rohkaffee in den Innenraum der Rösttrommel einbringbar bzw. aus diesem entnehmbar ist. Zweckmäßiger Weise weist die Stirnwand einen in Umfangsrichtung verlaufenden Rand auf, der reibschlüssig mit der Umfangswand in Eingriff bringbar ist.

Eine konstruktiv einfache und zuverlässige Weiterbildung sieht vor, dass die Rösttrommel eine zentrale Achse aufweist, die mit Ihrem Endabschnitt in einer in dem Lagerzapfen ausgebildeten Durchgangsbohrung angeordnet ist.

Gemäß eines weiteren Aspekt der Erfindung wird erstmals für eine Röstvorrichtung der eingangs genannten Art vorgeschlagen, dass die Rösttrommel mittels einer Einrichtung zum manuellen Drehen der Rösttrommel antreibbar ist, welche auf besonders einfache Weise als mit der Rösttrommel verbundene Handkurbel ausgebildet ist. Durch eine manuelle Drehung lässt sich bei gleichzeitiger Sichtbarkeit des röstenden Kaffees die Drehgeschwindigkeit einstellen und an die jeweiliegen Wünsche des Betreibers in Abhängigkeit vom visuell wahrnehmbaren Röstergebnis variieren. Erfindungsgemäß können auch elektrische Antriebsmotoren zum Antreiben der Rösttrommel verwendet werden.

Gemäß eines weiteren Aspekts der Erfindung wird vorgeschlagen, dass das Gehäuse aus mehreren vorzugsweise plattenförmigen Gehäuseabschnitten zusammensetzbar ist, die ineinandersteckbar oder miteinander verschraubbar und/oder verklebbar sind. Auf diese Weise ist eine Art Baukasten realisiert, so dass - aus Einzelteilen (die Vorrichtung) von Privatpersonen zusammengebaut werden kann.

Die Wärmeausbeutung und die Hitzebeständigkeit des Gehäuses lässt sich dadurch verbessern, dass das Gehäuse innen wenigstens teilweise mit einer wärmebeständigen Beschichtung ausgekleidet ist; diese ist vorzugsweise aus V2A-Edelstahl oder aus einem verzinkten Blech gebildet.

Der Röstvorgang lässt sich bei einer Röstung mit Heißluft dadurch beeinflussen, dass die Heißlufterzeugungsanlage in unterschiedlichen Abständen zu der Rösttrommel festlegbar ist. Zweckmäßigerweise ist eine Abstandsanzeigevorrichtung zwischen der Rösttrommel und der Heißlufterzeugungsanlage angeordnet, so dass dieser Röstparameter einfach einstellbar ist.

Die erfindungsgemäße Röstvorrichtung ist nachfolgend anhand von Ausführungsbeispielen mit Bezugnahme auf die beiliegenden Zeichnungen beschrieben. Es zeigen:
- Figur 1: eine mobile Röstvorrichtung in einer Seitenansicht;
- Figur 2: die Röstvorrichtung aus Figur 1 in einer Frontansicht;
- Figur 3: eine erfindungsgemäße Rösttrommel in einer schematischen vergrößerten Darstellung;
- Figur 4: eine mobile Röstvorrichtung mit Heißlufterzeugungsanlage in einer perspektivischen Ansicht;
- Figur 5: eine Ausführungsform einer Führungsleiste in vergrößerter Schnittdarstellung.

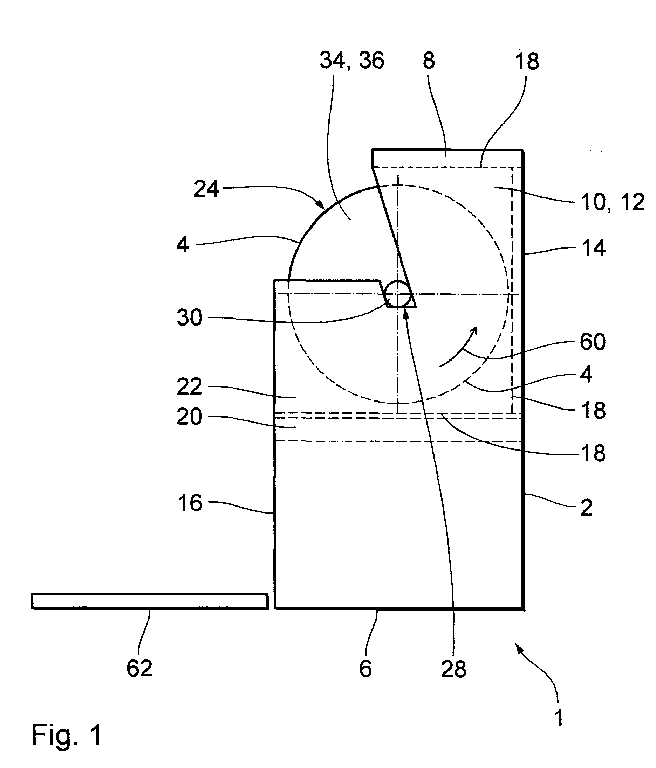

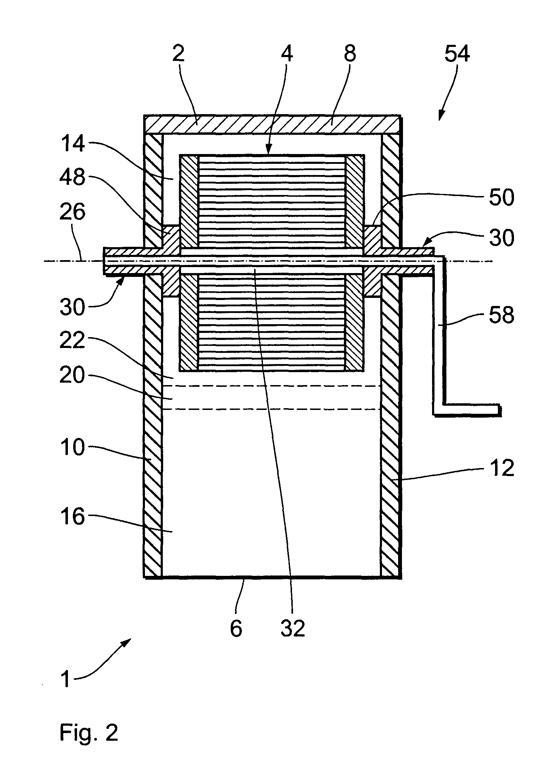

Die in den Figuren 1 und 2 schematisch dargestellte mobile Röstvorrichtung dient zum Rösten von Rohkaffee; sie könnte jedoch auch für andere thermische Behandlungen von Lebensmitteln verwendet werden. Sie ist angepasst an eine Röstung im privaten Bereich und kann beispielsweise auf einem Tisch platziert werden. Die erforderlicher Wärmeenergie wird von einer separaten nicht dargestellten Heißlufterzeugungsanlage bereitgestellt, deren Heißluftstrom in unten näher beschriebener Weise auf die erfindungsgemäße Röstvorrichtung geleitet wird. Die Röstvorrichtung 1 besteht im Wesentlichen aus einem Gehäuse 2 und einer an diesem gelagerten Rösttrommel 4 zur Aufnahme der zu röstenden Kaffeebohnen.

Das eine im Wesentlichen quaderförmige äußere Gestalt aufweisende Gehäuse 2 ist aus mehreren baukastenartigen zusammensetzbaren, zuvor zugeschnittenen Gehäuseabschnitten in Form von Holzplatten zusammengesetzt, namentlich einer unteren Grundplatte 6, einer gegenüberliegenden oberen Stirnwand 8, Seitenwänden 10,12 sowie einer Rückwand 14, einer gegenüberliegenden vorderen Wand 16 und einer Zwischenplatte 20. Durch die Zwischenplatte 20 ist im oberen Bereich des Gehäuses 2 ein Röstraum 22 gebildet, in dem die Rösttrommel 4 angeordnet ist. Die Gehäuseabschnitte sind miteinander verschraubt und/oder verklebt. Ein vorgeformtes hitzebeständiges Blech 18, welches vorzugsweise aus V2A-Stahl oder verzinktem Blech besteht, bildet eine Verkleidung an einem Teil der Innenseite des Gehäuses 2 und erstreckt sich U-förmig entlang der Zwischenplatte 20, der Rückwand 14 und der oberen Stirnwand 8, so dass diese Gehäuseabschnitte vor einer zu großen Wärmeeinwirkung geschützt sind. Eine derartige Verkleidung könnte auch an weiteren Oberflächen des Gehäuses 2 vorgesehen sein. Anstelle der Blechverkleidung kann das Gehäuse auch aus Holz mit einer hitzebeständigen Beschichtung, wie z.B. einer HPL-Beschichtung, zusammengesetzt sein oder das gesamte Gehäuse 2 kann aus einem temperaturbeständigem Material, wie z.B. aus schamottisiertem Karakotta, bestehen. Unter schamottisiertem Karakotta versteht man eine Schamott-Legierung, die derartige Bestandteile aufweist, dass das Material schwer entflammbar und temperaturbeständig ist.

Durch eine in dem Gehäuse 2 ausgebildete Öffnung 24, die sich ausweislich Figur 1 über die Stirnwand 8, die vordere Wand 16 und die Seitenwände 10,12 erstreckt, ist die Rösttrommel 4 in den Röstraum 22 des Gehäuses 2 einbringbar und aus diesem entnehmbar. Für eine um eine Längs- und Drehachse 26 drehbare Lagerung der Rösttrommel 4 sind in den Seitenwänden 10,12 mit der Öffnung 24 verbundenen Einbuchtungen 28 ausgebildet, in welche seitlich abstehende Lagerzapfen 30 der Rösttrommel 4 hineinlegbar sind, die somit gleitend gelagert sind.

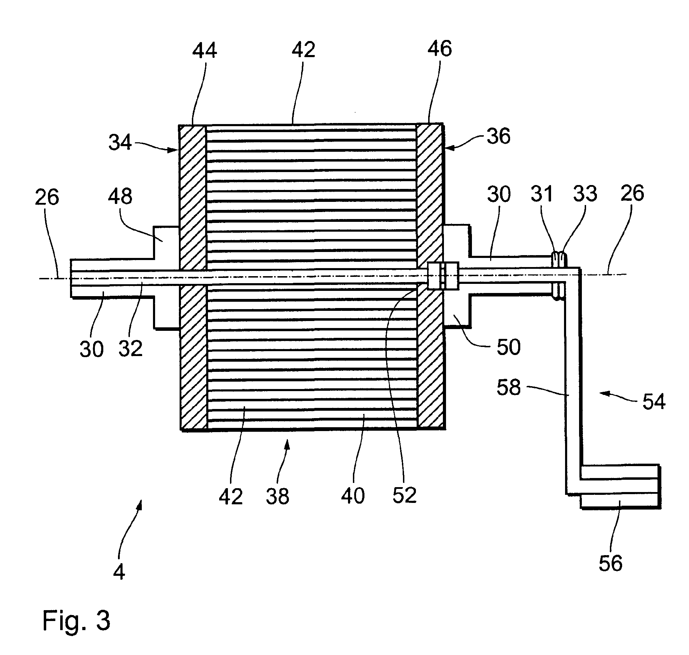

Die Rösttrommel 4, vgl. auch Fig. 3, ist im wesentlichen rotationssymmetrisch bezüglich der Drehachse 26 und weist eine zentrale Achse 32, zwei stirnseitige Wände 34, 36 sowie eine zylindrische Umfangswand 38 auf, die als Gitter oder Sieb 40 ausgebildet ist. Zwischen den durch verzinkte Drähte gebildeten Maschen des Gitters 40 sind im wesentlichen quadratische Öffnungen 42 in der Rösttrommel 4 ausgebildet, die eine solche Größe aufweisen, dass der in dem Innenraum der Rösttrommel befindliche Kaffee von außen sichtbar ist und ein Heißluftstrom - und/oder Wärmestrahlung - in den Innenraum der Rösttrommel 4 einströmen kann, um die für die Röstung erforderliche Wärmeenergie einzubringen. Das Gitter 40 ist nach Art eines Drahtgeflechts ausgebildet.

An beiden metallischen stirnseitigen Wänden 34, 36 ist jeweils ein in Umfangsrichtung verlaufender Rand 44, 46 angeformt, der die seitlichen Randabschnitte des Gitters 40 übergreift. Während der Rand 46 zusätzlich mit Hilfe von mehreren über den Umfang angeordneten Nieten oder mit Schrauben und Muttern dauerhaft mit dem Gitter 40 verbunden ist, ist der Rand 44 lediglich in einer reibschlüssigen oder kraftschlüssigen Verbindung mit dem Gitter 40, so dass die Stirnwand 38 zum Befüllen oder Entleeren der Rösttrommel 4 abnehmbar ist.

An den Lagerzapfen 30 sind ringförmige Abstandsringe 48, 50 angeformt, die im montierten Zustand (vgl. Fig. 2) die Rösttrommel 4 in dem Gehäuse zentrieren und auf Abstand von den Seitenwänden 10, 12 halten. Der Abstandsring 48 ist mit der Wand 34 verschraubt, indem mehrere Schrauben axial gegebenenfalls unter Zwischenschaltung einer Unterlegscheibe durch Bohrungen in der Wand 34 hindurchgesteckt und in den Abstandsring 48 eingeschraubt sind. Der Abstandsring 50 ist mittels einer Mutter 52, die auf der als Gewindestange ausgebildeten Achse 32 aufgeschraubt ist, mit der Wand 36 verbunden. Die Achse 32 ist durch Durchgangsbohrungen der Lagerzapfen 30 hindurchgesteckt. Wie aus Fig. 3 ersichtlich ist, ist auf das Gewinde der Achse 32 benachbart unter Zwischenschaltung einer Unterlegscheibe zu dem - rechten - Lagerzapfen 30 eine Mutter 31 und eine Kontermutter 33 aufgeschraubt, so dass der Lagerzapfen 30, die Wand 36 und somit auch die Umfangswand 38 axial fixiert sind.

Die Rösttrommel 4 ist bei dem in den Figuren 1 bis 3 gezeigten Ausführungsbeispiel mit einer Einrichtung zum manuellen Drehen der Rösttrommel 4 ausgestattet. Diese Einrichtung ist als Handkurbel 54 mit einem Handgriff 56 ausgebildet, welche derart auf einen Endabschnitt der Achse 32 aufgesteckt ist, dass der Handgriff 56 parallel und beabstandet zur Drehachse 26 und der Achse 32 angeordnet ist. Durch manuelles Drehen der Handkurbel 54 wird mittels eines Hebelarms 58 ein Drehmoment auf die Rösttrommel 4 aufgebracht.

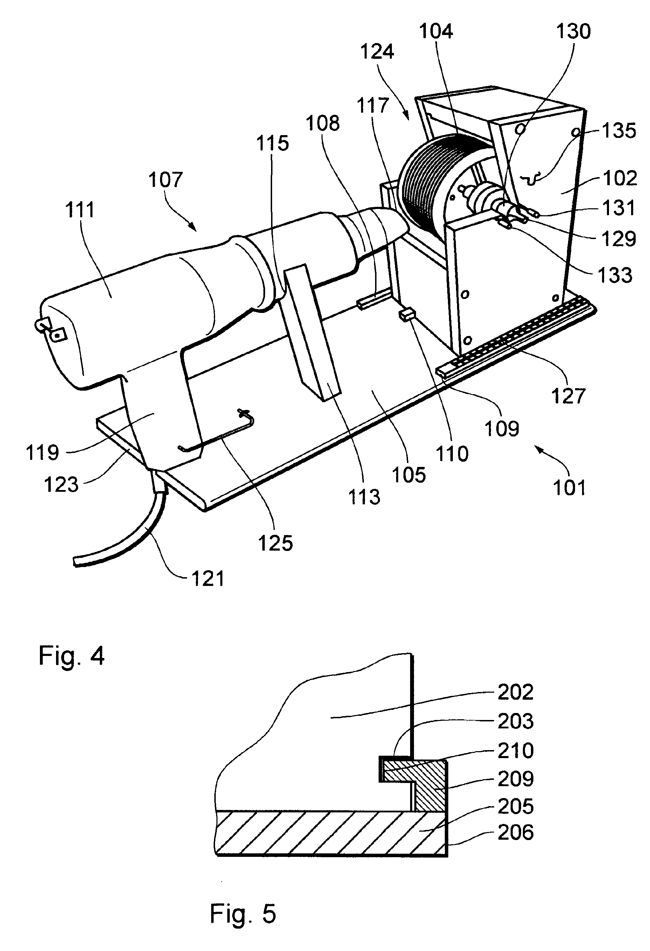

In Fig. 4 ist eine Röstvorrichtung 101 dargestellt, die neben einem Gehäuse 102 und einer Rösttrommel 104, welche in der oben beschriebenen Weise miteinander verbunden sind und gleichsam miteinander wechselwirken, zusätzlich eine Bodenplatte 105 und eine separate Heißlufterzeugungsanlage 107 aufweist. Das Gehäuse 102 der Röstvorrichtung 101 ist auf der Bodenplatte 105 in deren Längserstrekkungsrichtung verschiebbar angeordnet. Die Bodenplatte 105 weist ferner in Längserstreckungsrichtung auf der der Heißlufterzeugungsanlage 107 gegenüberliegenden Seite beiderseits des Gehäuses 102 je eine seitliche Führungsleiste 108, 109 auf. Damit wird die Ausrichtung des Gehäuses 102 mit der darin befindlichen Öffnung 124 im Wesentlichen in Richtung des durch die Heißlufterzeugungsanlage 107 erzeugten Luftstrom weisend sichergestellt. Ferner ist auf der Bodenplatte 105 auf der der Heißlufterzeugungsanlage 107 zugewandte Seite des Gehäuses 102 ein ortsfester Anschlag 110 angeordnet, der einen vorausgewählten Mindestabstand zwischen der Rösttrommel 104 und der Heißlufterzeugungsanlage 107 definiert.

Auf der Oberseite einer der seitlichen Führungsleisten 109 ist ein Längenamaßstab 127 aufgebracht. Dieser beginnt in der Ebene der Austrittsöffnung 117 des Heißluftgebläses 111 oder ist mit seinem Anfang an die durch den Anschlag 110 definierte Ebene angelegt und erstreckt sich in Richtung des austretenden Luftstroms. Das Gehäuse kann mit seiner der Austrittsöffnung 117 zugewandten Seite somit leicht ablesbar in einem vorher ausgewählten Abstand angeordnet werden.

Die Rösttrommel 104 ist bei dem Ausführungsbeispiel aus Fig. 4 mittels eines nicht dargestellten separaten elektrischen Motors vorzugsweise mit zwischengeschaltetem Getriebe antreibbar gestaltet. Zu diesem Zweck ist ein vierkantiger Achszapfen an den Lagerzapfen 130 angeformt, der zur Aufnahme in einem entsprechenden Vierkantprofil des Elektromotorantriebs dient. Vorzugsweise wird ein Batterie- oder Akkumulatorbetriebener Elektromotor verwendet. Solche Motoren sind bekannt und relativ kostengünstig. Das Gehäuse weist an der Motorseitigen Seitenwand zwei Abstützbolzen 131 und 133 auf, die dazu dienen, den angehängten Antriebsmotor in der zur Aufnahme des Achszapfens geeigneten Position auszurichten. Ferner ist eine Öse 135 an derselben Seitenwand angebracht, in die der Elektromotor mit einer entsprechenden Vorrichtung, beispielsweise einem Schraubenkopf, eingehängt und gleichzeitig gegen Rotation gesichert werden kann.

In einem anderen Ausführungsbeispiel, vgl. Fig. 5, sind die seitlichen Führungsleisten 209 als L-förmige Profile ausgebildet. Die Führungsleisten 209 sind widerum in der Haupterstreckungsrichtung der Bodenplatte 205 an dem der Heißlufterzeugungsanlage gegenüberliegenden Ende der Bodenplatte und mit deren seitlichen Rändern 206 bündig abschließend angeordnet. Dabei greift ein Schenkel 210 der Führungsleiste 209 in eine entsprechend angeordnete und ausgeformte Nut 203 in der Seitenwand des auf der Bodenplatte 205 stehenden Gehäuses 202 und sichert dieses gegen das Abheben von der Bodenplatte 205 während des Betriebs der Röstvorrichtung. Anstelle des L-Profils, kann auf jedes andere, formschlüssig übergreifende Profil, wie beispielsweise ein Schwalbenschwanzprofil, für die Leiste 209 zur Führung und Sicherung des Gehäuses 202 verwendet werden.

Die separate, einfach annehmbare Heißlufterzeugungsanlage 107 ist in dem in Fig. 4 dargestellten Ausführungsbeispiel ein handelsübliches, eine Austrittsöffnung 117 und einen Handgriff 119 aufweisendes Heißluftgebläse 111, dass mittels eines auf der Bodenplatte 105 befestigten Fußes 113 im Wesentlichen zentrisch unterstützt ist. Der Fuß 113 ist auf seiner Oberseite mit einer Auflagefläche oder Aufnahme 115 versehen, die im Wesentlichen der Kontur des aufgelegten Heißluftgebläses 111 folgt und dieses im aufgelegten Zustand dadurch derart ausrichtet, dass der aus der Austrittsöffnung 117 des Heißluftgebläses 111 austretende Luftstrom auf den unteren Bereich der Öffnung 124 in dem Gehäuse 102 gerichtet ist und dabei im wesentlichen parallel zur Bodenplatte strömt. Das Heißluftgebläse 111 sitzt mit dem unteren Ende seines Handgriffs 119 auf der Bodenplatte 105 auf, wobei ein nach unten aus dem Handgriff herausgeführtes Netzkabel 121 in eine Einkerbung am stirnseitigen Ende 123 der Bodenplatte 105 eingeführt ist und dabei gleichzeitig als Längenanschlag dient, d. h. die Position des Heißluftgebläses in Strömungsrichtung der Luft fixiert. Das Heißluftgebläse 111 ist vorzugsweise mit einem ander Bodenplatte 105 schwenkbar im Bereich des Netzkabels 121 angeordneten Bügels in seiner Position fixiert. Der Bügel kann mit einer Schraube, die durch eine Borhung hindurchgesteckt ist und in die Bodenplatte 105 eingeschraubt ist, einseitig verschwenkbar gelagert sein und an der anderen Seite beispielsweise durch eine Klemmverbindung fixiert werden, so dass der Endbereich des Netzkabels 121 fixiert ist von dem Bügel, während er innerhalb einer in der Bodenplatte 105 ausgebildeten Nut (vgl. Fig. 4) eingelegt ist. Besonders vorteilthaft an dieser Ausführungsform ist, dass ein handelsübliches Heißluftgebläse verwendet wird, welches als Massenartikel vergleichsweise kostengünstig hergestellt werden kann.

Die Betriebsweise der erfindungsgemäßen Röstvorrichtung ist nachfolgend beschrieben:

Zunächst wird die Rösttrommel 4 aus der Lagerung durch die Öffnung 24 aus dem Röstraum 22 entnommen, anschließend die Wand 34 zusammen mit dem Lagerzapfen 30 von den Gitter 40 und der Achse 32 gelöst und dann Rohkaffee in den Innenraum der Rösttrommel 4 eingebracht. Dann wird die Wand 34 wieder an dem Gitter 40 befestigt und die gesamte Rösttrommel 4 durch die Öffnung 24 in den Innenraum des Gehäuses 2 eingelegt (Figur 1 oder 2).

Zum Rösten wird dann die Heißlufterzeugungsanlage 107 so relativ zu dem Gehäuse 2, 102 platziert, etwa manuell oder mit Hilfe der Bodenplatte 105 und des Fußes 113, dass der austretende Heißluftstrom durch die Öffnung 24 des Gehäuses 2, 102 und durch die Öffnungen 42 der Rösttrommel 4 in den Innenraum der Rösttrommel 4 einströmt und zwar horizontal und in einer Ebene unterhalb der Drehachse 26. Dann wird durch manuelles Drehen an der Handkurbel 54 oder mittels eines Elektromotors die Rösttrommel 4 in Richtung des in Figur 1 dargestellten Pfeils 60 (entgegen dem Uhrzeigersinn) in Rotation versetzt, so dass der im unteren Abschnitt der Rösttrommel 4 befindliche Kaffee in Bewegung gesetzt wird und aufgrund der Rotation teilweise in Richtung des Pfeils 60 transportiert wird und dann wieder herunterfällt. Auf diese Weise kommt es zu einer guten Durchmischung des Rohkaffees und zu einem guten Vermischen mit dem Heißluftstrom und somit zu einem guten Wärmeübergang zwischen dem Heißluftstrom und dem Rohkaffee. Während des Röstens kann von dem Bediener durch die Öffnung 24, 124 und die in dem Gitter 40 ausgebildeten Öffnungen 42, 124 der Röstvorgang visuell beobachtet werden, so dass die Drehgeschwindigkeit der Rösttrommel 4, die Dauer der Röstung und die genaue Ausrichtung der Heißlufterzeugungsanlage und somit des Heißluftstroms bezüglich der Rösttrommel 4 eingestellt und/oder bei Bedarf variiert werden kann. Der Heißluftstrom wird durch die Öffnungen 42 auf der Rösttrommel 4 und die Öffnung 24, 124 aus dem Röstraum 22 des Gehäuses 2, 102 ausströmen. Aufgrund der Drehung der Rösttrommel 4 in Richtung des Pfeils 60 kann der Röstvorgang im Innern der Rösttrommel 4 genau beobachtet werden, beispielsweise die sich während des Röstens ändernde Farbe des Rohkaffees.

Der Abstand der Heißlufterzeugungslage 107 zu der Rösttrommel 4 und dem Gehäuse 2, 102 kann eingestellt werden mit Hilfe einer Abstandsanzeigevorrichtung in Form eines mehrere Markierungen aufweisenden Stabs 62 (Figur 1) der einerseits an das Gehäuse 2 anlegbar ist oder in Form eines unmittelbar auf die Bodenplatte 105 aufgebrachten Längenmaßstabs 127. Entweder wird dann die Heißlufterzeugungsanlage 107 an unterschiedlichen Markierungen Stabs 62 platziert, oder im Fall der Ausführungsform gemäß Fig. 4 und Fig. 5 wird dann der Abstand des Gehäuses 192 entlang der seitlichen Führungsleiste 104 relativ zu der festen Position der Heißlufterzeungsanlage 107 verschoben, so dass die Wärmeeinbringung für die Röstung als Röstparameter wiederholbar, einstellbar und einfach variierbar ist.

In nicht dargestellter Weise könnte die Röstvorrichtung zusammen mit einer Heißlufterzeugungsanlage in einem gemeinsamen Gehäuse angeordnet sein. Zusätzlich könnte eine Steuerungseinrichtung mit einem Microcomputer und einer Bedieneinrichtung und einer Anzeigeeinrichtung vorgesehen sein, um eine elektrische Energiezufuhr zu einer Widerstandsheizung der Heißlufterzeugungsanlage und den Volumen- oder Mengenstrom der Luft einzustellen und zu regeln. Ferner könnte mit Hilfe der Steuerungseinrichtung die Dauer der Röstung und möglicherweise der zeitliche Temperaturverlauf betreffend die Heißluft programmiert werden, um wiederkehrende Röstergebnisse zu erzielen. Auch könnten unterschiedliche Röstprogramme programmiert werden, um unterschiedlichen Rohkaffeearten oder deren Eigenschaften berücksichtigen.

### Bezugszeichenliste

- 1: Röstvorrichtung
- 2: Gehäuse
- 4: Rösttrommel
- 6: Grundplatte
- 8: Stirnwand
- 10: Seitenwand
- 12: Seitenwand
- 14: Rückwand
- 16: Seitenwand
- 18: Blech
- 20: Zwischenplatte
- 22: Röstraum
- 24: Öffnung
- 26: Längs- und Drehachse
- 28: Einbuchtungen
- 30: Lagerzapfen
- 31: Mutter
- 32: Achse
- 33: Kontermutter
- 34: Wand
- 36: Wand
- 38: Umfangswand
- 40: Gitter
- 42: Öffnungen
- 44: Rand
- 46: Rand
- 48: Abstandsring
- 50: Abstandsring
- 52: Mutter
- 54: Handkurbel
- 56: Handgriff
- 58: Hebelarm
- 60: Pfeil
- 62: Stab
- 101: Röstvorrichtung
- 102: Gehäuse
- 104: Rösttrommel
- 105: Bodenplatte
- 107: Heißlufterzeugungsanlage
- 108: seitliche Führungsleiste
- 109: seitliche Führungsleiste
- 110: Anschlag
- 111: Heißluftgebläse
- 113: Fuß
- 115: Auflagefläche
- 117: Austrittsöffnung
- 119: Handgriff
- 121: Kabel
- 123: stirnseitiges Ende
- 124: Öffnung
- 125: Drahtbügel
- 127: Längenmaßstab
- 129: Achszapfen
- 131: Abstützbolzen
- 133: Abstützbolzen
- 135: Öse
- 202: Gehäuse
- 203: Nut
- 205: Bodenplatte
- 206: seitlicher Rand
- 209: seitliche Führungsleiste
- 210: Schenkel

## Patentansprüche

1. Röstvorrichtung zum Rösten von Rohkaffee o. dgl.,
mit einer drehbar gelagerten und antreibbaren Rösttrommel (4) zum Aufnehmen des zu röstenden Rohkaffees, die solche Öffnungen (42) aufweist, dass der Rohkaffee während des Röstens von außen sichtbar ist,
dadurch gekennzeichnet, dass die Rösttrommel (4) an einem im wesentlichen geschlossenen Gehäuse (2, 102, 202) gelagert und im Betrieb in diesem angeordnet ist, das mindestens eine als Sichtfenster ausgebildete Öffnung (24, 124) aufweist, so dass die Rösttrommel (4) und der zu röstende Rohkaffee von außen sichtbar ist.

2. Röstvorrichtung nach Anspruch,1
dadurch gekennzeichnet, dass die Rösttrommel (4) wenigstens teilweise eine als Gitter (40) ausgebildete Wand (38) aufweist, welche die Öffnungen (42) aufweist.

3. Röstvorrichtung nach Anspruch 2,
dadurch gekennzeichnet, dass eine Umfangswand (38) der Rösttrommel (4) als Gitter (40) ausgebildet ist.

4. Röstvorrichtung nach einem der vorstehenden Ansprüche,
dadurch gekennzeichnet, dass die Öffnung (24, 124) des Gehäuses (2) so gestaltet ist, dass die Rösttrommel (4) durch die Öffnung (24, 124) in das Gehäuse (2, 102, 202) einlegbar bzw. entnehmbar ist.

5. Röstvorrichtung nach Anspruch 4,
dadurch gekennzeichnet, dass das Gehäuse (2, 102, 202) im wesentlichen quaderförmig ausgebildet ist und die Öffnung (24, 124) teilweise in einer Stirnwand (8), gegenüberliegenden Seitenwänden (10,12) und einer vorderen Wand (16) ausgebildet ist.

6. Röstvorrichtung nach einem der vorstehenden Ansprüche,
dadurch gekennzeichnet, dass die Rösttrommel (4) zwei seitliche Lagerzapfen (30) aufweist, welche zur Lagerung in Seitenwänden (10, 12) des Gehäuses (2) ausgebildete Einbuchtungen (28) einlegbar sind.

7. Röstvorrichtung mindestens nach Anspruch 1,
dadurch gekennzeichnet, dass die Rösttrommel (4, 104) rotationsymmetrisch, vorzugsweise zylindrisch ausgebildet ist und wenigstens eine stirnseitige Wand (34) mit einem in Umfangsrichtung verlaufenden Rand (44) aufweist, der reibschlüssig mit der Umfangswand (38) der Rösttrommel (4) in Eingriff bringbar und lösbar befestigt ist, so dass der Rohkaffee in den Innenraum der Rösttrommel (4) einbringbar bzw. aus diesem entnehmbar ist.

8. Röstvorrichtung mindestens nach Anspruch 1,
dadurch gekennzeichnet, dass die Rösttrommel (4, 104) mittels einer Einrichtung zum manuellen Drehen der Rösttrommel (4, 104), vorzugsweise einer mit der Rösttrommel (4, 104) verbundenen Handkurbel (54), antreibbar ist.

9. Röstvorrichtung nach einem der Ansprüche 1 bis 8,
dadurch gekennzeichnet, dass die Rösttrommel (4) mittels eines separaten elektrischen Motors antreibbar ist.

10. Röstvorrichtung mindestens nach Anspruch 1,
dadurch gekennzeichnet, dass das Gehäuse (2, 102, 202) aus mehreren vorzugsweise plattenförmigen Gehäuseabschnitten zusammensetzbar ist, die ineinandersteckbar oder miteinander verschraubbar und/oder verklebbar sind.

11. Röstvorrichtung nach einem der vorstehenden Ansprüche,
dadurch gekennzeichnet, dass das Gehäuse (2, 102, 202) innen wenigstens teilweise mit einer wärmebeständigen Beschichtung ausgekleidet ist.

12. Röstvorrichtung nach einem der vorstehenden Ansprüche,
gekennzeichnet durch eine separate Heißlufterzeugungsanlage (107) zum Erzeugen eines Heißluftstroms zum Rösten des Rohkaffees, welche so relativ zu dem Gehäuse (2, 102, 202) platzierbar ist, dass der Heißluftstrom durch die Öffnung des Gehäuses (2) und die Öffnungen der Rösttrommel (4) in den Innenraum der Rösttrommel (4) einleitbar ist.

13. Röstvorrichtung nach Anspruch 12,
dadurch gekennzeichnet, dass das Gehäuse (2, 102, 202) und die Heißlufterzeugungsanlage (107) auf einer Bodenplatte (105, 205) in unterschiedlichen Abständen anordenbar sind und dass eine Abstandsanzeigevorrichtung (62, 127) zwischen der Rösttrommel (4, 104) und der Heißlufterzeugungsanlage (107) angeordnet ist.

14. Röstvorrichtung nach Anspruch 13,
dadurch gekennzeichnet, dass die Bodenplatte (105, 205) wengistens eine parallel zu dem durch Heißlufterzeugungsanlage (107) erzeugten Heißluftstrom angeordnete Führungsleiste (108, 109, 209) zur Führung und Ausrichtung des Gehäuses (2, 102, 202) aufweist.

15. Röstvorrichtung mindestens nach Anspruch 13,
dadurch gekennzeichnet, dass die Bodenplatte (105, 205) einen Anschlag (110) aufweist, der einen Mindestabstand zwischen der Heißlufterzeugungsanlage (107) und dem Gehäuse (2, 102, 202) festlegt.

16. Röstvorrichtung mindestens nach Anspruch 14,
dadurch gekennzeichnet, dass die Führungsleiste (209) ein übergreifendes Profil aufweist und in Eingriff in ein entsprechend an das Gehäuse (202) angeformtes Führungselement (203) eine formschlüssige Verbindung bildet.

17. Verfahren zum Rösten von Rohkaffee oder dgl., bestehend aus dem Einleiten eines Heißluftstroms in ein im Wesentlichen geschlossenes Gehäuse (2, 102, 202) durch eine als Sichtfenster in dem Gehäuse (2, 102, 202) ausgebildete Öffnung (24, 124), dem Drehen einer dem zu röstenden Rohkaffee aufnehmenden, an dem Gehäuse (2, 102, 202) gelagerten und in diesem angeordneten Rösttrommel (4), die solche Öffnungen aufweist, dass der Rohkaffee von außen während des Röstens sichtbar ist.
